Europäisches Patentamt

European Patent Office

Office européen des brevets

(19)

(11) Veröffentlichungsnummer: **0 173 005**
**B1**

(12) **EUROPÄISCHE PATENTSCHRIFT**

(45) Veröffentlichungstag der Patentschrift: **19.09.90**

(21) Anmeldenummer: **85106947.6**

(22) Anmeldetag: **05.06.85**

(51) Int. Cl.⁵: **A 21 B 1/44, A 21 B 1/26**

(54) **Backofen mit Heissluftumwälzheizung.**

(30) Priorität: **28.08.84 DE 3431505**

(43) Veröffentlichungstag der Anmeldung:
**05.03.86 Patentblatt 86/10**

(45) Bekanntmachung des Hinweises auf die
Patenterteilung:
**19.09.90 Patentblatt 90/38**

(84) Benannte Vertragsstaaten:
**AT BE CH FR GB IT LI NL SE**

(56) Entgegenhaltungen:
**DE-A-1 432 916**
**FR-A-2 324 269**
**US-A-3 412 695**

(73) Patentinhaber: **Werner & Pfleiderer GmbH**
**Theodorstrasse 10 Postfach 30 12 20**
**D-7000 Stuttgart 30 (DE)**

(72) Erfinder: **Schröder, Helmut, Dipl.-Ing. (FH)**
**Im Krautgarten 10**
**D-7120 Bietigheim-Bissingen (DE)**

Courier Press, Leamington Spa, England.

**Beschreibung**

Die Erfindung betrifft einen Backofen nach dem Oberbegriff des Patentanspruches 1.

Backöfen der vorstehend erwähnten Gattung sind bekannt aus der DE—OS 14 32 916 und der US—PS 3 412 695. Bei diesen Backöfen ist die Kette des Drehtellerantriebs ohne erkennbare Abdichtung aus dem Backraum herausgeführt und um das freiliegende Ritzel der Antriebswelle geschlungen. Damit genügt die bekannte Ausführung des Drehtellerantriebs nicht den Anforderungen, die an Backöfen der vorausgesetzten Art, welche auch als Backschrank bezeichnet wird, gestellt werden. Für einen Backschrank gilt, wie im übrigen für alle Backöfen, die Forderung, den Backraum gegen die umgebende Atmosphäre so dicht abzuschließen, daß kein Dampf, Kondensat oder Schmiermittel in das Backlokal gelangen können. Die Möglichkeit des Austritts von Dampf etc. besteht jedoch bei den oben erwähnten bekannten Backschränken, bei denen für die Durchführung der Kette eine gewöhnliche Öffnung in der den Backraum umgebenden Wand vorgesehen ist. Der Austritt von Dampf an dieser Stelle kann auch nicht dadurch verhindert werden, daß die Kettendurchführung unterhalb der Drehscheibe angeordnet ist, weil der Dampf durch den notwendigen Bewegungsspalt zwischen dem Umfang der Drehscheibe und dem sie umgebenden Zwischenboden auch in den unter der Drehscheibe gelegenen Raum gelangt. Der erwähnte Raum stellt insoweit einen Teil des Backraums dar, als in ihm im wesentlichen die gleichen atmosphärischen Bedingungen herrschen wie im übrigen Teil des Backraumes, in dem sich das Backgut befindet.

Der an der Kettendurchführung austretende Dampf bedeutet einen Energieverlust und verschlechtert somit die Wirtschaftlichkeit des Backprozesses. Die Kondensation des Dampfes an den Wänden und Einrichtungsgegenständen des Backlokals fördert dort die Bildung von Schimmel. Außerdem kann von der Öffnung für die Kettendurchführung Dampf in den mit Isoliermaterial gefüllten Raum zwischen der Backraumwand und der Außenverkleidung des Backofens eindringen, was Korrosionsschäden und eine Beeinträchtigung der Isolierwirkung zur Folge hat. Schließlich wird wegen der notwendigen Schmierung der Kette die Umgebung der Antriebswelle erheblich verschmutzt.

Ferner ist aus der FR—A—23 24 269 ein Gerät zum Grillen und Garen von stückigen Nahrungsmitteln bekannt, bei dem in einem wärmeisoliertem Gehäuse eine horizontal rotierende Trommel angeordnet ist. Der Antrieb der Trommel erfolgt über einen außerhalb des Garraumes angeordneten und damit von diesem räumlich getrennten, Kettenantrieb, wodurch ein erhöhter Platzbedarf besteht.

Der Erfindung liegt die Aufgabe zugrunde, bei einem Backofen gemäß dem Oberbegriff des Patentanspruches 1 den Austritt von Dampf aus dem Backraum sowie Verschmutzungen infolge des Kettenantriebs für den Drehteller zu verhindern, und zwar unter Beibehaltung der üblichen geringen Bauhöhe des Drehtellerantriebs.

Diese Aufgabe wird erfindungsgemäß durch die im Kennzeichnungsteil des Patentanspruches 1 angegebenen Merkmale gelöst.

Der Erfindung liegt die Erkenntnis zugrunde, daß die Durchführung einer Kette durch eine Wand während des Betriebs nicht vollkommen dampfdicht gehalten werden kann, weil in den Zwischenräumen der Kettenglieder ständig Dampf aus dem Backraum nach außen befördert wird wogegen die Abdichtung einer Wellendurchführung durch übliche Bauelemente auf einfache Weise möglich ist. Bei der erfindungsgemäßen Lösung erübrigt sich jegliche Abdichtung der Kette, weil diese sich vollständig in einem Kettenkasten befindet, dessen außerhalb des Backraums gelegener Teil ohne weiteres dampfdicht ausgeführt werden kann und damit zu einem Bestandteil des Backraumes wird. Statt der Kette braucht nun nur die senkrechte Welle an ihrem Eintritt in den Kettenkasten abgedichtet zu werden, was mit einer handelsüblichen Dichtung geschehen kann. Auf diese Weise wird mit einfachen baulichen Mitteln eine vollkommene Abdichtung gegen Dampfaustritt erreicht, ohne daß es dazu einer Vergrößerung der Bauhöhe für den Drehscheibenantrieb bedarf. Dies ist deshalb von Bedeutung, weil das Ein-und Ausfahren der Etagenwagen durch die Anordnung der Drehscheibe in möglichst geringer Höhe über dem Boden begünstigt wird. Schließlich können auch keine Verschmutzungen durch das Kettenschmiermittel auftreten, weil die Kette auf ihrem ganzen Umfang von dem Kettenkasten umgeben ist.

Durch das Merkmal des Patentanspruches 2 wird erreicht, daß über den Kettenkasten keine Wärmeverluste entstehen können. Gleichzeitig wird die Bildung von Kondensat im Kettenkasten verhindert.

Das Merkmal des Patentanspruches 3 hat zur Folge, daß der Antriebsmotor nicht über den im allgemeinen rechteckigen Grundriß des Backofens hinausragt, wodurch ein dichtes Aneinanderstellen mehrerer Backofen möglich ist.

Besonders zweckmäßig ist die Anordnung gemäß Patentanspruch 4, wei 1 dabei der Antriebsmotor leicht zugänglich ist und die Nische außerdem in ihrem über dem Antriebsmotor liegenden Bereich für die Unterbringung eines Schaltschranks nutzbar gemacht werden kann.

Durch das Merkmal des Patentanspruches 5 wird verhindert, daß Backrückstände od. dgl., die durch den Spalt zwischen Drehscheibe und Zwischenboden fallen, auf die Kette gelangen und den Antrieb beeinträchtigen.

Ein Ausführungsbeispiel der Erfindung ist anhand der Zeichnung beschrieben. Es zeigt

Fig. 1 einen senkrechten Schnitt durch einen schematisch dargestellten Backofen,

Fig. 2 einen waagrechten Schnitt durch einen Backofen gemäß Fig. 1 in größerem Maßstab und

Fig 3 einen Schnitt nach der Linie III—III in Fig. 2.

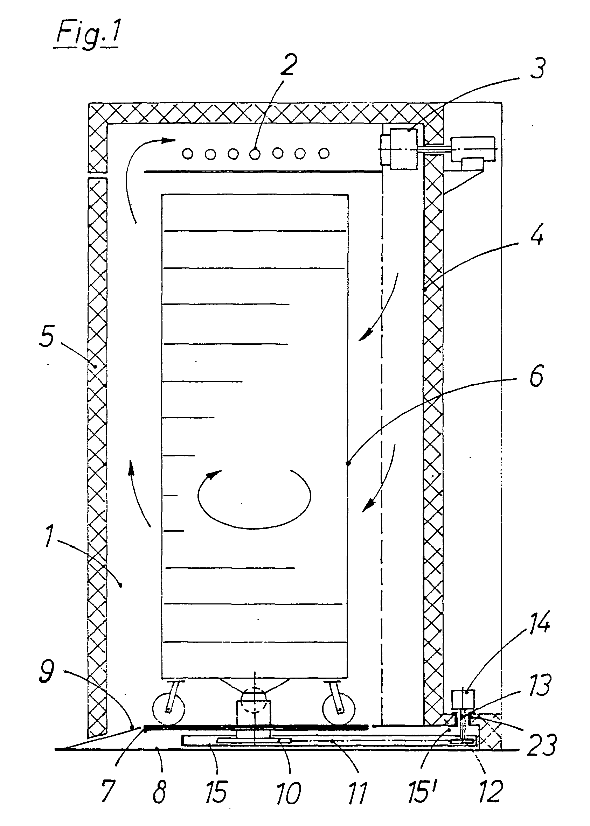

Der Backofen gemäß Fig. 1 weist eine Heißluft-Umwälzheizung auf, bei welcher die im Backraum 1 befindliche Luft von einer im Beispielsfall aus Elektro-Heizstäben bestehenden Heizung 2 erhitzt und durch einen Ventilator 3 umgewälzt wird, wie dies durch Pfeile veranschaulicht ist. Der Backraum 1 ist von einem auf der Außenseite wärmeisolierten Gehäuse 4 umschlossen. An einer Seite des Backraums befindet sich im Gehäuse 4 eine Tür 5 zum Beschicken des Backofens mit einem das Backgut aufnehmenden Etagenwagen 6, der während des Backens um eine senkrechte Achse rotiert. Zu diesem Zweck steht der Etagenwagen auf einer Drehscheibe 7, welche am Boden 8 des Backraums gelagert ist. Der Boden 8 wird von einer den Backraum 1 nach unten dicht abschließenden Stahlplatte gebildet. In Höhe der Drehscheibe 7 ist ein Zwischenboden 9 vorge-sehen der im Bereich der Tür 5 als Rampe zum Ein-, und Ausfahren des Etagenwagens 6 gestaltet ist. Die Drehscheibe 7 weist an ihrer Unterseite einen Zahnkranz 10 auf, von dem eine Kette 11 zu einem Ritzel 12 führt, welches auf einer außerhalb des Backraums 1 befindlichen senkrechten Welle 13 angeordnet ist. Die Welle 13 ist in bekannter Weise mit einem Antriebsmotor 14 gekoppelt. Ein Kettenkasten 15 umgibt die Kette 11 auf ihrem ganzen Umfang und erstreckt sich vom Zahnkranz 10 bis zum Ritzel 12.

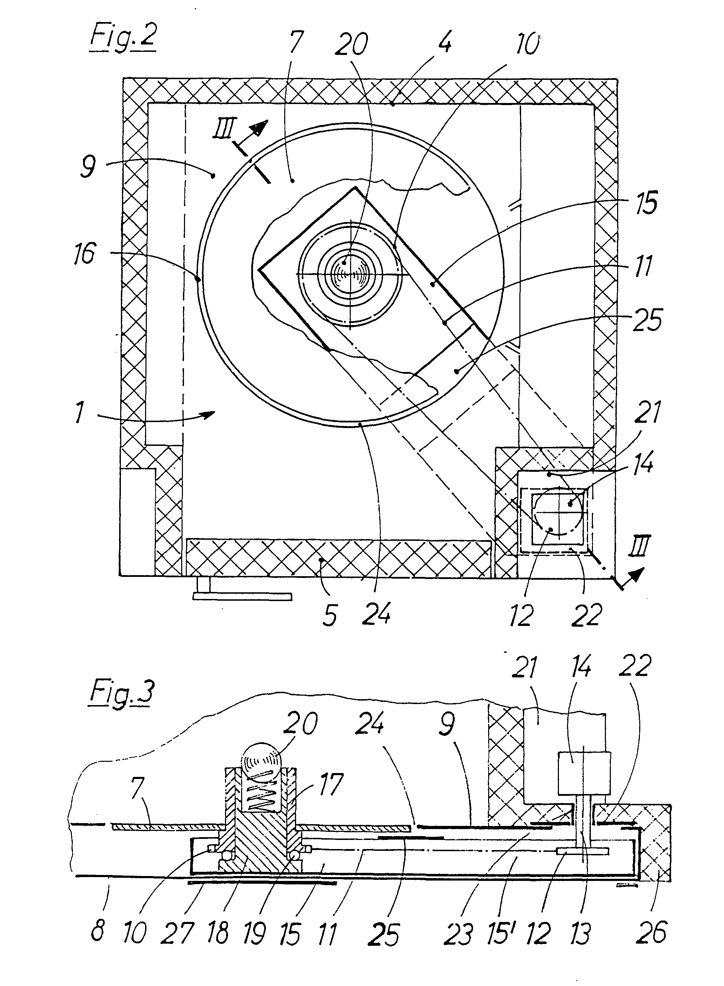

Aus den Fig. 2 und 3 sind Einzelheiten des Backofens ersichtlich:

Die Drehscheibe 7 befindet sich in einem Ausschnitt 16 des Zwischenbodens 9 und ist leicht abnehmbar auf einer Traghülse 17 befestigt. Die Traghülse 17, an welcher der Zahnkranz 10 angebracht ist, dreht sich um ein Zentrallager 18 und stützt sich dabei auf ein Axiallager 19. In einer Axialbohrung des Zentrallagers 18 ist eine zur Zentrierung des Etagenwagens 6 bestimmte Kugel 20 federnd gelagert.

Die senkrechte Welle 13 mit dem Antriebsmotor 14 befindet sich in einer Nische 21 an der vorderen rechten Ecke des Gehäuses 4. Von dort erstreckt sich auf dem Boden 8 des Backraums der Kettenkasten 15 diagonal bis zur Mitte des Backofens. Der Kettenkasten 15 weist einen U-förmigen Querschnitt auf und ist mit dem Gehäuse 4 dampfdicht verschweißt. An seinem außerhalb des Backraums befindlichen Teil 15' ist der Kettenkasten 15 mit einem ebenfalls dampfdicht befestigten Deckel 22 versehen, durch den die senkrechte Welle 13 in den Kettenkasten eintritt. An dieser Stelle befindet sich auf der Welle 13 eine Dichtung 23, welche in bekannter Weise als Packung, Schiebemuffe, od.dgl. ausgebildet ist. Der Deckel 22 kann abnehmbar befestigt und gegebenfalls als Träger für den Antriebsmotor 14 gestaltet sein.

Im Inneren des Backraums ist der Kettenkasten 15 nach oben offen, weil er dort bereits von der Drehscheibe 7 und dem Zwischenboden 9 überdeckt ist. Lediglich im Bereich des Spaltes 24 zwischen der Drehscheibe 7 und dem Ausschnitt 16 des Zwischenbodens ist eine Abdeckung 25 vorgesehen.

Zur Vermeidung von Wärmeverlusten ist der außerhalb des Backraums 1 gelegene Teil 15' des Kettenkastens in gleicher Weise wie das Backraumgehäuse mit einer Wärmeisolierung 26 versehen. Zum gleichen Zweck ist der Boden 8 des Backraums durch Distanzscheiben 27 vom Fundament abgesetzt und damit gegen Wärmeableitung isoliert.

## Patentansprüche

1. Backofen mit Heißluft-Umwälzheizung, in dessen Backraum (1) ein das Backgut aufnehmender und während des Backens um eine senkrechte Achse rotierender Etagenwagen (6) auf einer am Boden (8) des Backraums (1) gelagerten Drehscheibe (7) steht, wobei die Drehscheibe (7) an ihrer Unterseite einen Zahnkranz (10) aufweist, von dem eine Kette (11) zu einem Ritzel (12) führt, welches auf einer außerhalb des Backraums (1) befindlichen und mit einem Antriebsmotor (14) gekoppelten senkrechten Welle (13) angeordnet ist, dadurch gekennzeichnet, daß die Kette (11) von einem Kettenkasten (15) umgeben ist, dessen außerhalb des Backraumes (1) gelegener Teil (15') durch dampfdichte Verschweißung mit dem Gehäuse (4) ein Bestandteil des Backraumes (1) bildet, wobei die senkrechte Welle (13) an ihrem Eintritt in den Teil (15') des Kettenkastens (15) mit einer Dichtung (23) versehen ist.

2. Backofen nach Anspruch 1, dadurch gekennzeichnet, daß der außerhalb des Backraums (1) gelegene Teil (15') des Kettenkastens (15) eine Wärmeisolierung (26) aufweist.

3. Backofen nach den Ansprüchen 1 oder 2, dadurch gekennzeichnet, daß die senkrechte Welle (13) mit dem Antriebsmotor (14) in einer Nische (21) des Backofengehäuses (4) angeordnet ist.

4. Backofen nach Anspruch 3, dadurch gekennzeichnet, daß die Nische (21) sich an einer vorderen Ecke des Backofengehäuses (4) befindet.

5. Backofen nach Anspruch 1, bei welchem sich die Drehscheibe (7) in einem Ausschnitt eines in der gleichen Horizontalebene liegenden Zwischenbodens (9) befindet, dadurch gekennzeichnet, daß der Kettenkasten (15) innerhalb des Backraums (1) mindestens im Bereich des Spaltes (24) zwischen Drehscheibe (7) und Ausschnitt (16) mit einer Abdeckung (25) versehen ist.

## Revendications

1. Four de cuisson à chauffage par circulation d'air, dans l'espace (1) de cuisson duquel se trouve un chariot (6) à étages, recevant le produit qu'il s'agit de cuire, et tournant sur un axe vertical pendant la cuisson, ce chariot étant placé sur un disque tournant (7) monté sur le fond (8) de l'espace de cuisson (1), et le disque tournant (7) présentant sur son côté inférieur une couronne dentée (10) à partir de laquelle une chaîne (11) conduit à un pignon (12), qui est disposé sur un arbre (13) vertical placé à l'extérieur de l'espace (1) de cuisson et qui est couplé à un moteur (14) d'entraînement, four caractérisé en ce que la chaîne (11) est entourée par un caisson (15) de chaîne, dont la partie (15'), située à l'extérieur de l'espace (1) de cuisson, forme, grâce à une soudure étanche à la vapeur avec le corps (4), une partie constitutive de l'espace (1) de cuisson, l'arbre (13) vertical étant muni d'un joint (23) d'étanchéité à son entrée dans la partie (15') de caisson (15) de chaîne.

2. Four de cuisson selon la revendication 1, caractérisé en ce que la partie (15') du caisson (15) de chaîne, partie située à l'extérieur de l'espace (1) de cuisson, présente une isolation thermique (26).

3. Four de cuisson selon la revendication 1 ou 2, caractérisé en ce que l'arbre (13) vertical est disposé avec le moteur (14) d'entraînement dans un compartiment (21) du corps (4) de four de cuisson.

4. Four de cuisson selon la revendication 3, caractérisé en ce que le compartiment (21) se trouve à un coin avant du corps (4) de four de cuisson.

5. Four de cuisson selon la revendication 1, dans lequel le disque tournant (7) se trouve dans une échancrure d'un fond intermédiaire (9) situé dans le même plan horizontal, four caractérisé en ce que le caisson (15) de chaîne est muni d'un recouvrement (25), à l'intérieur de l'espace (1) de caisson, au moins dans la zone de la fente (24) située entre le disque tournant (7) et l'échancrure (16).

**Claims**

1. Baking oven with hot air circulation heating, in the baking space (1) of which a tiered trolley (6), which receives the stock to be baked and during the baking rotates about a vertical axis, stands on a turntable (7) borne at the base (8) of the baking space (1), wherein the turntable (7) at its underside displays a toothed rim (10), from which a chain (11) leads to a pinion (12), which is arranged on a vertical shaft (13), which is situated outside the baking space (1) and coupled with a drive motor (14), characterised thereby, that the chain (11) is surrounded by a chain-case (15), the part (15') of which disposed outside the baking space (1) forms a component of the baking space (1) through having been welded together with the housing (4) in vapour-tight manner, wherein the vertical shaft (13) is provided with a seal (23) at its entry into the part (15') of the chain case (15).

2. Baking oven according to claim 1, characterised thereby, that the part (15'), which disposed outside the baking space (1), of the chain case (15) displays a thermal insulation (26).

3. Baking oven according to claim 1 or 2, characterised thereby, that the vertical shaft (13) with the drive motor (14) is arranged in a recess (21) of the baking oven housing (4).

4. Baking oven according to claim 3, characterised thereby, that the recess (21) is situated at a front corner of the baking oven housing (4).

5. Baking oven according to claim 1, in which the turntable (7) is situated in a cut-out of an intermediate base (9) lying in the same horizontal plane, characterised thereby, that the chain case (15) is provided with a cover (25) within the baking space (1) at least in the region of the gap (24) between the turntable (7) and the cut-out (16).

Fig.1

Fig.2

Fig.3